Europäisches Patentamt

European Patent Office

Office européen des brevets

(11) Publication number: **0 271 254**
**A2**

(12) **EUROPEAN PATENT APPLICATION**

(21) Application number: **87310418.6**

(22) Date of filing: **25.11.87**

(51) Int. Cl.⁴ **C09J 3/14 , C08L 23/08**

(30) Priority: **28.11.86 GB 8628519**

(43) Date of publication of application:
**15.06.88 Bulletin 88/24**

(84) Designated Contracting States:
**AT BE CH DE ES FR GB GR IT LI LU NL SE**

(71) Applicant: **EXXON CHEMICAL PATENTS INC.**
**1900 East Linden Avenue**
**Linden New Jersey 07036(US)**

(72) Inventor: **Vanhaeren, Gerard**
**41-B Rue Deceuster**
**B-1330 Rixensart(BE)**

(74) Representative: **Dew, Melvyn John et al**
**Exxon Chemical Limited Exxon Chemical**
**Technology Centre P.O. Box 1**
**Abingdon Oxfordshire, OX13 6BB(GB)**

(54) **Hot melt compositions.**

(57) Terpolymers comprising 70 to 92.5 weight per cent of ethylene, 5 to 20 weight per cent of vinyl acetate and 2.5 to 10 weight per cent acrylic acid, having a melt viscosity at 160°C of 3000 to 7000 mPa.s and a softening point as measured by Ring and Ball Method (ASTM E-28) of 70° to 100°C are blended with tackifiers (e.g. hydrocarbon petroleum resins) as hot melt compositions.

EP 0 271 254 A2

# HOT MELT COMPOSITIONS

This invention relates to holt melt compositions comprising ethylene-containing terpolymers.

Terpolymer telomer waxes of ethylene, acrylic acid and vinyl acetate in specified mole proportions are known from GB 1344745. However these terpolymers are of relatively low molecular weight of from 2000 to 5000 and of relatively low viscosity of from 100 to 1500 centipoises at 140°C. These waxes are said to have surprising and outstanding emulsion stability and can be formulated to prepare acrylic latax floor polishes having improved properties. Similar interpolymers are known from GB/394883 which discloses terpolymers of 64-92% ethylene, 4-16% alpha-beta ethylenically unsaturated carboxylic acid comonomer and 4-30% unsaturated ester comonomer, of viscosity 500-10000 centipoises. Such terpolymers are useful for adhesives per se, but this publication makes no suggestion that the terpolymers may be combined with a tackifier to yield any advantageous hot melt composition properties.

We have surprisingly found that certain terpolymers of ethylene, acrylic acid and vinyl acetate of higher viscosity have good physical and adhesive properties which made them particularly useful in hot melt adhesive compositions.

According to this invention hot melt adhesive composition comprises a tackifier blended with a terpolymer of 70 to 92.5 weight per cent of ethylene, 5 to 20 weight per cent of vinyl acetate and 2.5 to 10 weight per cent of acrylic acid, the terpolymer having a melt viscosity at 160°C of 3000 to 7000 mPa.s (centipoise) and a softening point as measured by Ring and Ball method (ASTM E-28) of 70° to 100°C.

The detailed formulation of the hot melt compositions will be determined by their intended end use.

However for hot melt compositions found to have particular value, the preferred proportions of monomer units in the terpolymer are 75 to 90 weight per cent of ethylene, 5 to 18 weight per cent of vinyl acetate and 5 ot 7 weight per cent of acrylic acid. The preferred melt viscosity of the terpolymer at 160°C is between 3500 and 5500 mPa.s.

It is unusual for the terpolymer component melt index[1] (gm/10 min at 190°C) to be between 1500 and 3500, especially between 2300 and 3250. The terpolymer component melt flow rate [125°C, 57 gm (gm/10 min)] is usually between 7 and 20, especially between 12 and 18. The terpolymer component ring and ball softening point (°C) is usually between 75 and 100, preferably between 80 and 95.

Other terpolymer component physical property ranges which result in advantageous compositions of the invention may be as follows:

| | | |
|---|---|---|
| Melting[2] : | Peak °C | 60 to 90 |
| | | preferably 65 to 85 |
| | $H_f$ cal/g | 5 to 15 |
| | | preferably 7.5 to 12.5 |
| Crystallisation[2] | Peak °C | 45 to 75 |
| | | preferably 50 to 70 |
| | $H_c$ cal/g | 5 to 15 |
| | | preferably 7.5 to 12.5 |
| Tear strength: | (N/mm) | typically 10 to 20 |
| Ultimate Tensile: | (M.Pa) | typically 2 to 5 |
| Elongation at Break | (%) | typically 30 to 130 |

(1) Melt index is calculated using the relationship
$$\text{Equiv MI} = 266 \, \text{MFR}^{0.865}$$
(2) Melting and Crystallisation properties are measured by Differential Scanning Calorimetry (DSC) as per ASTM D 3417 at 10°C per minute heating rate.

The terpolymers used in the compositions of the invention ar usually prepared by polymerising the monomers in the vapour phase at high pressure, usually 1500 to 2500 bars, at a temperature usually between 150°C to 250°C preferably between 190°C and 220°C, using a free radical initiator. Suitable initiators are peroxyesters such as peroxypivalates, peroctoates or perbenzoates or a mixture of these or peroxides.

The polymerisation reaction can be continuous and the product can be continually withdrawn from the reactor as it is formed. The viscosity of the product is controlled by using a transfer agent such as isobutylene. Other suitable transfer agents are compounds such as an alcohol, a ketone, an aldehyde or an aliphatic or aromatic hydrocarbon.

The compositions of this invention can contain the terpolymer in ionomeric form, e.g. polymers containing metal carboxylate groups. Such ionomers possess ionic crosslinks in the solid state. Due to the low viscosity of the terpolymer lower viscosity ionomers than described in US Patent Specification No 3264272 with improved melt processability are obtained, and this has advantages in the hot melt compositions. Preferably the terpolymer component is ionomerised in situ in the composition. Such ionomerised compositions have been found to have improved mechanical and hot shear properties.

The terpolymers of this invention are particularly useful when blended with a tackifier to form hot melt compositions and such binary compositions require no wax to be added. Ternary compositions may be formulated for particular applications within relatively narrow ranges of terpolymers, wax and tackifier content, but in general wax-free compositions of the invention show much greater flexibility, as well as greater predictability in terms of their behaviour and performance.

The binary compositions have low viscosity without having to resort to the addition of waxes. The viscosity chosen for a conventional hot melt composition depends on its intended application. By way of example, conventional compositions intended for packaging applications are formulated to give a viscosity 500 to 3000 mPa.s (at 180°C), while for bookbinding a viscosity of 3000 to 10,000 mPa.s (at 180°C) is generally more appropriate. It is a feature of the compositions of the present invention, especially those which are wax-free, that the overall viscosity is low enough to give the composition acceptable handling properties, without resulting in an undesirable reduction in other properties. Preferably the melt viscosity at 180°C is from 800 to 1100 mPa.s.

The binary compositions also show generally greater adhesive strength over a wide range of substrates. The thermal stability of the compositions is also excellent.

In many applications of hot melt compositions it is highly desirable for the composition when molten to remain capable of sticking for a relatively long period to enable the materials to be bonded to be correctly positioned. That is to say, the "open-time" - the time available from applying molten composition to the substrates to be bonded until the substrates are brought together - should be long. At the same time, the "setting time" - the time from bringing the substrates together until the bond is set - should be short. Previously, formulations with long open time tended to have long setting times and vice versa. It is a particular feature for the present invention that it is possible to formulate compositions, especially those which are wax-free, which combine a long open time and a short setting time.

For particular applications, it may be appropriate for those wax-free hot melt adhesive compositions of the invention to contain other components common in hot melt formulation. Thus, for example, the compositions may also contain other polymers, anti-oxidants, plasticizers, fillers and flow improvers. But they preferably are totally or substantially free from wax and/or other viscosity reducing components.

Compositions in accordance with this invention may be used to bond a variety of substrates including metals such as aluminium, polyolefins such as polyethylene, other polymers such as polyvinylchloride, polyamides and polyesters, paper, textiles, treated and untreated cardboard and wood. The compositions are useful in a wide range of applications such as wood-working, book-binding, sanitary goods, assembly (including do-it-yourself and electronics applications) and packaging.

The invention is also applicable to methods and compositions for hot melt coating and laminating. It is believed that a binary, wax-free hot melt coating composition according to the invention may offer advantages such as better adhesion, better crease resistance, improved low temperature flexibility, and improved appearance in terms of gloss and clarity, depending upon the particular formulation employed.

Suitable tackfiers may be any species of natural or synthetic resin used for hot melt adhesive compositions. One may use for example rosin and rosin derivatives, hydrogenated rosin, esterified rosin, terpene resin, terpene-phenol resin, coumarone-indene resins, or hydrocarbon resins such as aliphatic/aromatic petroleum resin, hydrogenated petroleum resin or resin made by the copolymerisation of pure aromatic monomers.

Petroleum resins may be obtained by polymerising fractions having a boiling point from -15°C to 410°C at atmospheric pressure formed by the thermal cracking of petroleum feedstock. The fractions may be polymerised thermally or in the presence of a catalyst, for example, a Friedel-Crafts catalyst such as $AlCl_3$.

The product may be subjected to fractionation to remove $C_2$ to $C_4$ light ends, thermal soaking and distillation to remove hydrocarbons such as cyclic diolefins including cyclopentadiene and methyl cyclopentadiene as dimers. After thermal soaking and distillation one obtains an overhead naphta which usually boils at termperatures from 30 to 110°C.

Alternatively, the feed may be a $C_9$ feed which is a mixture of olefinic aromatics such as styrene, vinyl toluene, methyl styrene and indene or mixtures of $C_5$ and $C_9$ feeds may be polymerised. Alternatively, mixtures of $C_5$ feeds and pure aromatic monomers mentioned above, and/or terpenes may be polymerised.

The terpolymer and tackifier can be blended in different proportions but preferably the weight ratio of terpolymer to tackifier is between 40:60 and 70:30, more preferably between 55:45 and 65:35, for example 60:40. A high proportion of terpolymer tends to result in high viscosity, better cohesive strength, better tensile strength and better cold flexibility, whereas high tackifier contents tend to enhance adhesion and wetting. Usually an antioxidant, for example a hindered phenol is also added. An example is Irganox 1076 - octadecyl-3-(3,5 ditert butyl-4-hyddrophenyl-propionate).

Exmaple 1 - Production of terpolymer component

Five terpolymers A,B,C,D and E of different comonomer composition were evaluated, the ethylene weight content varying from 76.6 to 91.6%, the vinyl acetate weight content varying from 5.4 to 16.2% and acrylic acid content varying from 3.0 to 9.8%. The monomers were fed to the reactor in the gas state and polymerised at 190°C at a pressure of 1900 bars using tert-butyl perpivalate as initiator.

Various physical properties of these polymers are shown in Tables 1,2 and 3. Details of some of the tests carried out are as follows and given in Tables 1 and 3.

The melt flow rate was determined at 125°C using a 57 gm load and an equivalent melt index (MI) at 190°C, 2.16 kg load - ASTM 1238, condition E - calculated:

$$\text{Equivalent MI} = 266 \text{ MFR}^{0.865}$$

Melt viscosity was measured using a Brookdfield viscometer RVT (spindle 21).

The following examples illustrate the invention. From the results it may be concluded that the compositions of the invention, especially those which are wax-free, have a range of properties making them of exemplary value in the art.

TABLE 1

## NEAT POLYMERS CHARACTERISTICS

| | Terpolymer | | | | |
|---|---|---|---|---|---|
| | A | B | C | D | E |
| MELT FLOW RATE | | | | | |
| 125° C, 57 gm (gm/10 min) | 13.7 | 12.6 | 12.84 | 13.3 | 18.5 |
| MELT INDEX (gm/10 min) | | | | | |
| calculated (1) | 2560 | 2380 | 2420 | 2500 | 3320 |
| WEIGHT % Vinyl acetate (VA) | 16.2 | 14.2 | 12.2 | 7.1 | 5.4 |
| % acrylic acid (AA) | 4.4 | 9.2 | 9.8 | 6.8 | 3.0 |
| MELT VISCOSITY (mPa.s) | | | | | |
| 160° C | 4660 | 4250 | 4040 | 4225 (2) | 3510 |
| 180° C | 2770 | 2375 | 2230 | 2350 (2) | 2150 |
| RING AND BALL SOFTENING POINT (° C) | 86.5 | 81.0 | 81.8 | 91.3 | 94.7 |

(1) Calculated as MI = 266 MFR$^{0.865}$

(2) Polymer D is non-Newtonian at very low shear rate (0.5 - 5 sec$^{-1}$)

TABLE 2

MELTING AND CRYSTALLIZATION CHARACTERISTICS

D.S.C. : 10°C / MIN.

|  | Terpolymer | | | | |
|  | A | B | C | D | E |
| MOLE % Ethylene | 91.9 | 90.3 | 90.92 | 94.55 | 96.9 |
| MOLE % VA | 6.1 | 5.45 | 4.63 | 2.55 | 1.86 |
| MOLE % AA | 2.0 | 4.23 | 4.45 | 2.9 | 1.24 |
| MELTING | | | | | |
| PEAK °C | 76 | 69 | 69 | 83 | 87 |
| $\Delta H_f$ cal/gm | 10.2 | 7.8 | 6.8 | 13.9 | 12.5 |
| CRYSTALLIZATION | | | | | |
| PEAK °C | 60.5 | 53.5 | 51.5 | 67 | 72.5 |
| $\Delta H_c$ cal/gm | 9.2 | 8.2 | 7.7 | 11.1 | 12.7 |

TABLE 3

TERPOLYMERS

PHYSICAL PROPERTIES (1)

| | Terpolymer | | | | |
|---|---|---|---|---|---|
| | A | B | C | D | E |
| ● TEAR STRENGTH (N/mm) | 14.5 | 10.5 | 10.7 | 19.7 | 18.8 |
| ● ULTIMATE TENSILE (M.Pa) | 3.0 | 2.14 | 2.12 | 3.86 | 4.86 |
| ● ELONGATION AT BREAK (%) | 66 | 80 | 115 | 80 | 35 |

(1) ASTM D 638 - SPECIMEN TYPE IV - JAW SPEED 5.08 mm/min (2 in/min)
    1 mm thick specimen

- 11 -

Example 2 - Hot melt compositions

The five terpolymers of Example 1 were each blended with a tackifier to form a hot melt composition in a weight ratio of 60:40 (polymer to tackifier) to which in each case 0.5 weight % of an antioxidant Irganox 1076 was added. The tackifier, a saturated cylic hydrocarbon resin, was Escorez 5300 from Exxon Chemical.

Various tests were carried out and details are given in Tables 4 and 5.

Each of the adhesive compositions was applied by means of a hot-melt applicator at a temperature of 175°C onto a 100 micron thick polyethylene sheet or onto a 100 micron thick aluminium sheet to give a coating thickness of 80 to 100 microns. The coated sheets were then laminated by heat-sealing with another sheet of the same substrate at 110°C for polyethylene and 150°C for aluminium for 30 seconds.

The T-Peel Strength was determined using a tensiometer at a pulling speed of 5.08 cm per minute and a 2 cm wide strip specimen.

The Hot Shear Test was carried out on a one square inch specimen and 0.5 kg load hung in a ventilated oven. The temperature is increased by 10°C every 30 minutes and the temperature and time for bond failure is recorded.

- 12 -

The Shear Adhesion Fail Temperature (SAFT) is determined with the same lap shear bonds as for the hot shear test and 0.5 kg load but the temperature is raised continuously at a 24°C per hour rate. The shear fail temperature is the temperature at which the bond fails.

The peel adhesion fail temperature (PAFT) is carried out using a 2.5 cm wide and 5 cm long adhesive bond in peel mode and 100 gm load. The temperature is raised continuously at 24°C per hour rate. The peel fail temperature is the temperature at which the bond fails.

TABLE 4

HOT MELT PROPERTIES

|  | Terpolymers | | | | |
|  | A | B | C | D | E |
|---|---|---|---|---|---|
| MELT VISCOSITY 180° C (mPa.s) | 1035 | 975 | 917 | (1) | 830 |
| SOFTENING POINT (R + B) (° C) | 77.5 | 71.7 | 72 | 78.5 | 85.4 |
| PHYSICAL PROPERTIES |  |  |  |  |  |
| TEAR STRENGTH (N/mm) | 13.5 | 13.7 | 15.3 | 18.5 | 17.0 |
| TENSILE STRENGTH (mPa) | 1.7 | 1.7 | 1.9 | 2.1 | 2.6 |
| ELONGATION AT BREAK (%) | 145 | 115 | 82 | 115 | 120 |

(1) TERPOLYMER D BLEND EXHIBITS NON-NEWTONIAN BEHAVIOUR:

$$AT\ \ 4.65\ sec^{-1}\ :\ 1030\ mPa.s$$
$$AT\ \ 9.3\ \ sec^{-1}\ :\ 1000\ mPa.s$$
$$AT\ 18.6\ \ sec^{-1}\ :\ \ 980\ mPa.s$$
$$AT\ 46.5\ \ sec^{-1}\ :\ \ 955\ mPa.s$$

## TABLE 5

**HOT MELT PROPERTIES**

| | | Terpolymer | | | | |
|---|---|---|---|---|---|---|
| | | A | B | C | D | E |
| T-PEEL STRENGTH | PE/PE | 10.6 | 11.0 | 10.0 | 10.7 | 10.4 |
| (N/cm) | Al/Al | 8.6 | 9.1 | 10.2 | 9.8 | 9.0 |
| HOT SHEAR | PE | 60°/5' | 50°/10' | 50°/8' | 60°/5' | - |
| | Al | 60°/16' | 50°/27' | 50°/25' | 60°/25' | - |
| SHEAR ADHESION FAIL TEMP. | | | | | | |
| (°C) | PE | 62 | 62 | 58 | 63 | 59 |
| | Al | 69 | 72 | 69 | 70 | 73 |
| PEEL ADHESION FAIL TEMP. | | | | | | |
| (°C) | PE | 53 | 49 | 52 | 56 | 53 |
| | Al | 71 | 75 | 72 | 74 | 73 |

### Example 3

Example 2 was repeated except that the tackifier was a hydrogenated rosin ester (Foral 105) and only terpolymer D was tested.

Similar tests were carried out.

The compatibility of the terpolymer with the tackifying resin is very good as indicated by the very good transparency of a 1 mm thick sheet at ambient temperature.

The results are shown in Table 6.

TABLE 6

Terpolymer D /Tackifier 60/40

| MELT VISCOSITY 180° C (mPa.s) | | 975 |
|---|---|---|
| RING AND BALL (°C) | | 83 |
| **PHYSICAL PROPERTIES** | | |
| TENSILE STRENGTH (mPa) | | 1.95 |
| ELONGATION (%) | | 510 |
| TEAR STRENGTH (n/mm) | | 19.3 |
| T-PEEL (N/cm) | PE/PE AL/AL | 8.6 9.2 |
| SAFT (°C) | PE AL | 67 74 |
| PAFT (°C) | PE AL | 63 71 |

## CLAIMS

1.      A hot melt composition comprising a tackifier
blended with a terpolymer of 70 to 92.5 weight per cent of
ethylene, 5 to 20 weight per cent of vinyl acetate and 2.5 to
10 weight per cent of acrylic acid, the terpolymer having a
melt viscosity at 160°C of 3000 to 7000 mPa.s and a softening
point as measured by Ring and Ball Method (ASTM E-28) of
70° to 100°C.

2.      A composition according to claim 1 which is totally
or substantially free from wax and/or other viscosity reducing
components.

3.      A composition according to claim 1 or 2 wherein the
terpolymer comprises 75 to 90 weight per cent of ethylene, 5 to
18 weight per cent of vinyl acetate and 5 to 7 weight per cent
of acrylic acid.

4.      A composition according to any one of the preceding
claims wherein the melt viscosity of the terpolymer at 160°C is
between 3500 and 5500 mPa.s.

5.      A composition according to any one of the preceding
claims wherein the terpolymer has a melt index (gm/10 min at
190°C) of between 1500 and 3500.

6.      A composition according to any one of the preceding
claims wherein the melt flow rate [125°C, 57gm (gm/10 min)] of
the terpolymer is between 7 and 20.

7.      A composition according to any one of the preceding
claims wherein the Ring and Ball softening point of the
terpolymer is between 75 and 100°C.

8.      A composition according to any of one of the
preceding claims wherein the tackifier is a hydrocarbon resin.

9.      A composition according to any one of claims 1 to 7 wherein the tackifier is selected from polyterpenes, rosins, rosin esters and hydrogenated forms thereof.

10.     A composition according to any one of the preceding claims wherein the weight ratio of terpolymer to tackifier is between 40:60 and 70:30.

11.     A composition according to claim 10 wherein said ratio is between 55:45 and 65:35.

12.     A composition according to any one of the preceding claims which has a melt viscosity at 180°C of from 500 to 3000 Pa.s, preferably from 800 to 1100 mPa.s.

13.     A composition according to any one of the preceding claims wherein the terpolymer is in ionomeric form.

14.     The use of a composition according to any one of the preceding claims as a component of a hot melt roadmarking blend or a modified asphalt.